# FASCICULE DE BREVET EUROPEEN

(11) **EP 2 182 266 B1**
(45) Date de publication et mention de la délivrance du brevet: **22.02.2012**
(21) Numéro de dépôt: 09306037.4
(22) Date de dépôt: 29.10.2009
(51) Int. Cl.: F16L 41/12, F16L 41/06, F16J 15/02, F16J 15/10, F16J 15/06

(54) **Système d'étanchéité à joint pour collier de prise en charge, joint et collier**
Dichtungssystem mit Dichtung für Rohrklemme mit Aufnahmemittel und Klemme
Etancheity system with joint for pipe clamps with pich up means and clamp

(30) Priorité: 31.10.2008 FR 0857431
(43) Date de publication de la demande: 05.05.2010
(73) Titulaire: SAINTE LIZAIGNE SA, 36260 Sainte Lizaigne (FR)
(72) Inventeur: Verhee, Damien, 36100 ISSOUDUN (FR); Lejus, Laurent, 18120 QUINCY (FR)
(74) Mandataire: Michelet, Alain

(56) Documents cités:
- WO-A2-2005/108829
- DE-U1- 9 213 394
- FR-A- 2 365 747
- GB-A- 1 512 546
- US-A- 3 870 064

## Description

La présente invention concerne un système d'étanchéité à joint pour collier de prise en charge destiné à assurer l'étanchéité d'un montage d'un collier de prise en charge sur une conduite d'eau. Elle a donc des applications dans le domaine du Génie Civil et plus particulièrement la distribution de l'eau.

On connaît deux grandes familles de conduites : les conduites rigides, généralement métalliques, et les conduites « semi rigides », en matière synthétique : PE / PVC / PVC-BO.... Un collier de prise encerclant la conduite a généralement pour objet de recevoir un robinet. La liaison mécanique entre le robinet et la conduite est donc assurée par le collier qui peut (ou pas) entrer dans la chaîne d'étanchéité.

Classiquement, un joint de collier assure une fonction d'étanchéité entre le robinet, généralement un robinet de prise en charge, et la conduite de distribution d'eau. Le principe général est de comprimer un joint, généralement en caoutchouc, entre un robinet ou un collier et une conduite. Cette compression engendre des efforts sur la canalisation et peut poser des problèmes, notamment sur les conduites semi rigides.

En pratique, l'étanchéité entre le robinet et la conduite peut être assurée de différentes manières :
- Par deux étanchéités dissociées avec un premier joint (plat, torique ou autre) assurant l'étanchéité entre la conduite et le collier et un second joint (plat / torique / filasse ou autre) assurant l'étanchéité entre le collier et le robinet. Cependant il n'y a pas de continuité dans l'étanchéité et il existe quatre points d'étanchéités (robinet avec collier + collier avec conduite). Il en résulte une mise en contact de l'eau avec les matériaux du collier (une matière ou pièce supplémentaire rentre en contact avec l'eau) et il peut se produire un phénomène d'électrolyse, de corrosion ou de relargage en fonction de la matière du collier.
- Par un joint à double étanchéité de forme cylindrique monté dans un logement cylindrique dans lequel le fluage vers l'intérieur est supprimé par l'ajout d'une bague intérieure en cuivre, fonte, inox ou plastique. Cependant, il y a encore une fois mise en contact de l'eau avec le matériau de la bague et risque d'électrolyse, de corrosion ou de relargage. De plus, il y a un risque d'effet de poinçonnement de la bague sur la conduite, en particulier dans le cas d'un montage sur une conduite semi rigide. Enfin, il y a utilisation d'une pièce supplémentaire qui complique la fabrication et le montage sans compter son coût propre.

- Par un joint double étanchéité en deux parties fonctionnelles: un seul élément avec deux zones fonctionnelles dissociées, une au niveau du robinet et une au niveau de la conduite (lèvres débordant latéralement et épousant la conduite). Là encore, une bague intérieure anti-fluage doit être mise en oeuvre. Il en résulte les mêmes inconvénients que précédemment.
- Par un joint de collier à sangle voir le document FR2785359 du présent demandeur et qui utilise une bague anti-fluage sur l'extérieur du joint au lieu de l'intérieur. Ceci entraîne la mise en oeuvre d'un élément supplémentaire (la bague).

On connaît egalement par le document FR 2 365 747 une prise de branchement pour tuyau qui comporte un joint venant s'ajuster dans un orifice d'un bossage de collier. Le joint comporte des saillies latérales et l'orifice du bossage comporte une forme complémentaire en image des saillies latérales du joint avec des cavités correspondantes. totalement d'un joint qui doit pouvoir se déformer.

La présente invention propose un joint selon la revendication 9, qui, notamment, ne présente pas les inconvénients précédemment cités et qui assure l'étanchéité entre une conduite de distribution d'eau potable et un robinet sur une plage de diamètres définie. Ce joint permet de garantir le maintien d'un diamètre de passage minimum pendant la durée de vie du produit et évite la détérioration du joint durant le percement lors de la mise en place du collier et évite de générer des pertes de charge supplémentaires sur le réseau. Ceci est obtenu par la mise en oeuvre d'un joint de forme particulière dans une partie de réception de joint adaptée d'un canal d'une tête de prise de collier de prise en charge sur conduite, un robinet pouvant venir se fixer dans une partie de robinet dudit canal, le collier pouvant être de tout type : rigide, à sangle... Du fait de la mise en oeuvre de formes particulières et dont certaines sont adaptées entre le joint et son environnement (conduite, canal de la tête de prise, robinet) la déformation du joint est contrôlée lorsqu'on le comprime lors de l'installation du collier de prise en charge. En particulier, le jeu de formes proposé favorise la déformation du joint vers l'extérieur (vers la tête de prise du collier) lorsqu'il est compressé. La conception du joint est basée sur le principe de la conservation des volumes et la maîtrise des déformations. Des directions de déformation sont définies et des volumes de réserve sont prévus entre le joint et notamment le collier. Le joint proposé permet également le maintient d'un taux de compression optimal sur une gamme, compris entre un minimum déterminé (par exemple 20%) et un maximum déterminé (par exemple 40%). Cela permet de prendre en compte l'ensemble des tolérances de fabrication des différents éléments et de définir une plage d'utilisation du joint qui est reflétée en pratique par une possibilité d'utilisation sur différents diamètres de conduites. Parmi les formes mises en oeuvre, des nervures sur l'extérieur du joint assurent une réserve de déformation permettant de compenser les différentes configurations de montage et les tolérances de fabrication. Les nervures sont définies de telle sorte qu'une surface de contact minimum soit assurée entre le collier et le joint (par exemple 60% de la surface de la partie de réception de joint du canal de la tête de prise du collier de prise en charge) et que le volume de réserve soit suffisant pour compenser le déplacement axial de la matière du joint.

Ainsi, la présente invention concerne selon la revendication 1, un système d'étanchéité à joint pour collier de prise en charge sur conduite, le collier ayant une tête de prise comportant un canal interne étendu entre un coté conduite et un coté robinet à l'opposé du coté conduite, le canal coté robinet comportant intérieurement une section de robinet destinée à la fixation d'un robinet introduit dans le canal sur la tête de prise, le canal coté conduite comportant intérieurement une section de joint destinée à la réception du joint dans la tête de prise, le joint étant un élément tubulaire en matière sensiblement élastique destiné à être compressé entre le robinet et la conduite lorsque le collier est en place, monté sur la conduite, le robinet et/ou la tête de prise appuyant sur l'extrémité haute du joint et l'extrémité basse du joint appuyant sur la conduite, la périphérie interne du joint définissant un passage de fluide entre un orifice de la conduite et le robinet, la périphérie externe du joint étant maintenue par la section de joint du canal de la tête de prise.

Selon l'invention, la périphérie externe du joint d'un gabarit général cylindrique est formée d'une alternance de nervures en relief et de réserves en retrait, les nervures et réserves étant des zones parallèles étendues verticalement entre les extrémités haute et basse du joint, - les réserves en retrait s'arrêtent vers le bas à une distance déterminée de l'extrémité basse du joint, les nervures se rejoignant le long de la partie basse de la périphérie externe du joint la section de joint du canal ayant une surface intérieure régulière cylindrique complémentaire du gabarit de la périphérie externe du joint afin que des espaces libres soient créés entre la section de joint du canal et les réserves au moins à l'état non compressé du joint.

Dans divers modes de mise en oeuvre de l'invention, les moyens suivants pouvant être utilisés seuls ou selon toutes les combinaisons techniquement possibles, sont employés :
- le joint comporte en outre une lèvre périphérique débordante (latérale) vers l'extérieur à son extrémité inférieure,
- le joint ne comporte aucune lèvre débordante,
- la partie haute des nervures comporte un chanfrein, des espaces libres supplémentaires étant ainsi créés entre la partie haute de la section de joint du canal et les parties chanfreinées des nervures au moins à l'état non compressé du joint,
- la périphérie interne du joint a une forme en tonneau,
- l'épaisseur de la paroi du joint est globalement plus importante vers les extrémités haute et basse du joint qu'entre les deux,
- à l'état non comprimé, l'extrémité basse du joint est sensiblement plane (en fait, droite radialement par rapport à l'axe central du joint puisque l'extrémité basse suit globalement la forme d'une conduite) et est inclinée d'un angle de contact déterminé par rapport à la conduite, la partie interne (en pratique le bord interne), coté orifice, de l'extrémité basse du joint arrivant au contact de la conduite en premier lors de la mise en place du système, (cette inclinaison est différentielle selon la position le long de la circonférence du joint mais dans toutes lesdites positions, le bord interne de l'extrémité basse du joint arrive au contact de la conduite en premier)
- à l'état non comprimé, l'angle de contact (angle entre l'extrémité basse plane du joint et la surface de la conduite elle même plane ceci considéré dans un plan radial de la conduite) est compris entre 1 °et 10°,
- à l'état non comprimé, l'angle de contact (angle entre l'extrémité basse plane du joint et la surface de la conduite elle même plane ceci considéré dans un plan radial de la conduite) est de préférence d'environ 5°,
- à l'état non comprimé, l'extrémité haute du joint comporte une dépouille vers l'intérieur, la partie extérieure de l'extrémité haute du joint étant sensiblement plane et horizontale,
- la dépouille de l'extrémité haute du joint comporte des ondulations ou indentations,
- les ondulations ou indentations sont concentriques,
- la section de joint du canal de la tête de prise est circulaire et plane, (elle ne comporte pas de motif en relief/creux/de surépaisseur)
- la section de joint du canal de la tête de prise comporte un moyen de blocage de la rotation du joint, ledit moyen étant une (ou plusieurs) surépaisseur de matière destinée à s'engager au moins dans la partie haute d'une (ou plusieurs) réserve,
- de préférence, l'épaisseur de la surépaisseur de blocage de la rotation est inférieure à la profondeur de la réserve,
- la section de joint du canal de la tête de prise comporte un moyen d'indexation de la position en rotation du joint, ledit moyen étant une (ou plusieurs) surépaisseur de matière destinée à s'engager jusqu'au fond d'une (ou plusieurs) réserve,
- de préférence la largeur de la surépaisseur d'indexation est inférieure à la largeur de la réserve,
- de préférence, l'épaisseur de la surépaisseur d'indexation est inférieure à la profondeur de la réserve,
- la section de joint du canal de la tête de prise comporte un même moyen de blocage de rotation et d'indexation à type de surépaisseur,
- le joint est en caoutchouc,
- le joint est en élastomère,
- le joint est hybride, le joint présentant des zones de matière(s) d'élasticités différentes,
- le collier est un collier rigide et/ou déformable,
- le collier est un collier à sangles,
- la section de robinet du canal de la tête de prise comporte intérieurement un taraudage pour vissage du robinet,
- la section de robinet du canal de la tête de prise comporte un moyen de blocage du vissage/dévissage du robinet sous forme d'un orifice latéral de vissage d'une vis de blocage venant s'appuyer contre le robinet,
- la partie extérieure de l'extrémité haute du joint qui est plane et horizontale est comprimée par la tête de prise, (rebord de la tête de prise)
- la partie extérieure de l'extrémité haute du joint qui est plane et horizontale est comprimée par le robinet,
- la partie extérieure de l'extrémité haute du joint qui est plane et horizontale est comprimée par la tête de prise et par le robinet,
- la partie intérieure de l'extrémité haute du joint qui correspond à la dépouille est comprimée par le robinet,
- l'extrémité du robinet venant s'appuyer contre l'extrémité haute du joint est plane et horizontale,
- de préférence, au moins à l'état non comprimé, le diamètre interne du joint à son extrémité basse est supérieur au diamètre maximal de l'outil de forage de la conduite afin de réduire ou supprimer les risques d'attaque du joint par ledit outil,
- de préférence, au moins à l'état non comprimé, le diamètre interne du joint à son extrémité haute est supérieur au diamètre maximal de l'outil de forage de la conduite afin de réduire ou supprimer les risques d'attaque du joint par ledit outil,
- en alternative, le gabarit général de la périphérie externe du joint est conique, le gabarit coté extrémité basse du joint ayant un diamètre supérieur à celui du gabarit coté extrémité haute du joint.

L'invention concerne également un joint spécialement configuré pour une mise en oeuvre dans le système selon l'une ou plusieurs des caractéristiques décrites.

L'invention concerne légalement un collier de prise en charge sur conduite selon la revendication 10, comportant une tête de prise destinée à recevoir un joint et un robinet, la tête de prise étant spécialement configurée pour une mise en oeuvre dans le système selon l'une ou plusieurs des caractéristiques décrites.

Le nouveau joint permet une étanchéité directe entre le robinet et la conduite. Le collier n'intervient pas dans la chaîne d'étanchéité. Cette étanchéité est assurée par une seule pièce caoutchouc (ou matière de joint équivalente), en l'espèce le joint, ce qui permet d'éviter l'utilisation d'une bague anti-fluage intérieure ou extérieure, voire intégrée au joint. Le joint est complètement maintenu sur l'extérieur par le collier, dans le canal de la tête de prise de ce dernier.

Le chanfrein en partie haute du joint assure deux fonctions : faciliter l'introduction du joint dans la tête de prise lors de la phase de montage et la création d'une seconde zone de déformation plus particulièrement réservée à la zone d'appui entre le joint et le robinet et/ou un rebord de la tête de prise, ce qui évite le phénomène de gonflement classiquement localisé dans cette zone. Toujours vers la partie haute du joint, la zone de contact avec le robinet qui est dépouillée permet de générer des efforts vers l'extérieur. La forme générale intérieure en tonneau du joint permet de favoriser la déformation vers l'extérieur, notamment à sa partie inférieure, coté conduite, lors de la compression du joint. Le contact du joint sur la conduite est privilégié sur la partie la plus proche du trou de percement, ce qui favorise l'effort de contact, donc l'étanchéité au plus près du trou de percement. Ceci est assuré par un angle (par exemple 5°) entre l'axe de la conduite et la surface d'appuis du joint (à l'état non comprimé du joint). Cet angle permet également de compenser un éventuel affaissement de la conduite autour du trou de percement.

Le joint de l'invention donne une grande souplesse d'utilisation au système, ce qui permet de tolérer les deux types de montage suivants. Le montage du robinet sur le collier, puis le serrage du collier sur la conduite. Le montage du collier sur la conduite, puis le serrage du robinet sur le collier.

Enfin, le joint de l'invention permet également de diminuer les efforts de contact sur la conduite, donc de diminuer les contraintes appliquées à celle-ci, notamment pour les conduites plastiques semi-rigides.

La présente invention, sans qu'elle en soit pour autant limitée, va maintenant être exemplifiée avec la description qui suit d'un mode de réalisation et en relation avec :
la Figure 1 qui représente une vue en éclaté d'un exemple de collier pour mise en oeuvre de l'invention,
la Figure 2 qui représente une vue perspective d'un joint destiné à la mise en oeuvre de l'invention,
la Figure 3 qui représente une coupe d'une partie d'un exemple de collier mettant en oeuvre le système de l'invention,
la Figure 4 qui représente une coupe d'un joint, non comprimé, destiné à la mise en oeuvre de l'invention,
la Figure 5 qui représente une coupe d'une partie basse d'un joint destiné à la mise en oeuvre de l'invention, et
la Figure 6 qui représente une vue de dessus d'un joint destiné à la mise en oeuvre de l'invention.

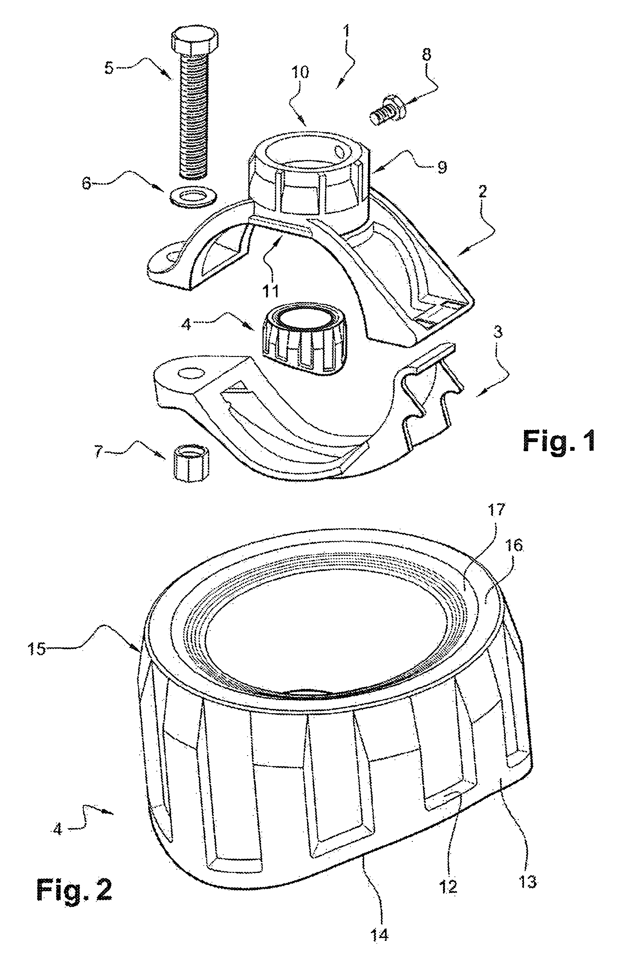

Le collier 1 de la Figure 1 est du type rigide en deux parties, une partie haute 2, dite de tête qui comprend une tête de prise 9, et une partie basse 3, dite de bouclage. Dans cet exemple de collier, les deux parties peuvent être solidarisées ensembles, d'un coté par un réglage continu à vis 5, rondelle 6 et écrou 7, et de l'autre coté, avec indexation, par accrochage de griffes étagées sur un support d'accrochage. La tête de prise comporte un canal traversant radial formant, d'une part, à sa partie haute une section de robinet 10 dans laquelle un robinet peut être fixé (de préférence par vissage) puis bloqué par une vis 8, et, d'autre part, à sa partie basse, coté conduite donc, une section de joint 11. La section de joint est configurée pour recevoir un joint 4. Lors de l'installation du collier sur une conduite (non représentée), le collier avec son joint (le robinet étant ou non déjà en place dans la section de robinet) est serré sur la conduite et cette dernière est ensuite percée à travers le robinet en place par un équipement adapté fixé temporairement sur le robinet.

Le joint 4 qui est globalement tubulaire, cylindrique droit, présente une structure particulière avec en périphérie externe une alternance de nervures 13 en relief et de réserves 12 en retrait. Les nervures 13 et réserves 12 sont des zones parallèles étendues verticalement entre les extrémités haute et basse du joint. Il est possible que les retraits ne descendent pas complètement jusqu'à l'extrémité basse du joint (comme représenté) lorsqu'il persiste une zone 14 non en retrait vers le bas du joint sur sa périphérie externe. Cette zone 14 est destinée à limiter localement la déformation vers les retraits (réserves) à proximité de la zone d'étanchéité du joint sur la conduite. On doit noter que la section de joint 11 du canal de la tête de prise a par contre une surface intérieure régulière (sans motifs en relief/surépaisseur) cylindrique complémentaire du gabarit de la périphérie externe du joint afin que des espaces libres soient créés entre la section de joint du canal et les réserves au moins à l'état non compressé du joint. Dans certaines variantes, la surface intérieure de la section de joint de la tête de prise peut comporter une/des indentations notamment pour empêcher la rotation du joint et/ou former une butée d'insertion et/ou d'indexation de position.

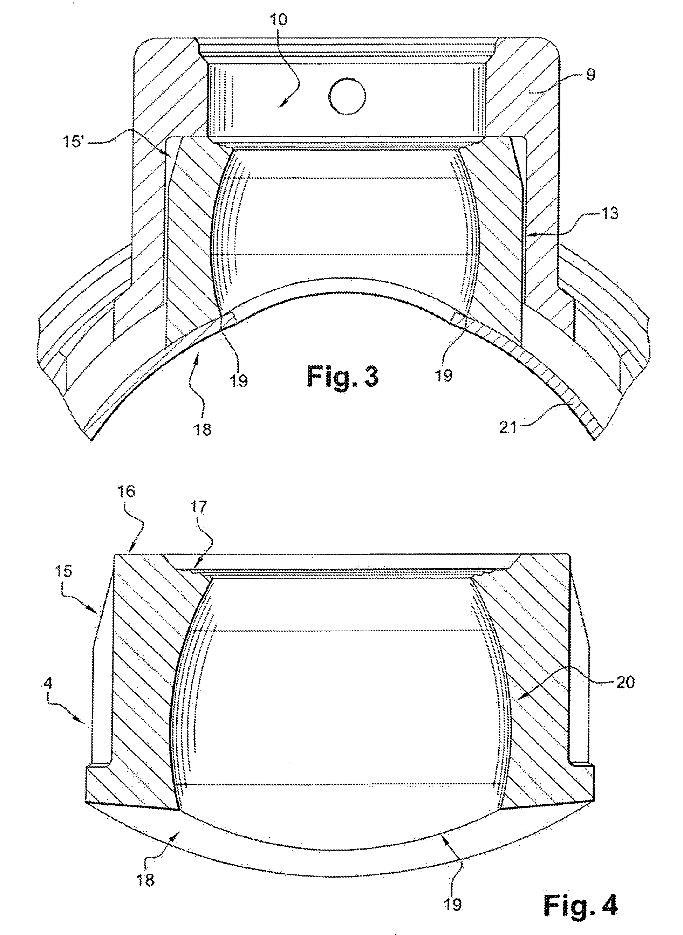

La partie haute des nervures du joint comporte un chanfrein 15 afin de former des espaces libres 15' (Figure 3) supplémentaires entre la partie haute de la section de joint du canal de la tête de prise 9 et les parties chanfreinées des nervures au moins à l'état non compressé du joint. L'extrémité haute du joint sur laquelle appuie la tête de prise et/ou le robinet une fois le collier monté sur la conduite, comporte vers l'intérieur une dépouille 17 avec des ondulations (ou indentations selon le cas) concentriques augmentant l'effort de contact sur des zones sensiblement concentriques afin d'augmenter l'efficacité du système d'étanchéité entre le joint et le robinet, et la partie extérieure 16 de l'extrémité haute du joint est sensiblement plane et horizontale.
Sur la Figure 3 on voit les espaces libres 15' supplémentaires entre la partie haute de la section de joint du canal de la tête de prise et les parties chanfreinées des nervures. Dans cet exemple de réalisation, la tête de prise 9, par un rebord, va pouvoir venir s'appuyer contre la partie extérieure 16 de l'extrémité haute du joint qui est plane et horizontale et le robinet va pouvoir venir s'appuyer contre la partie intérieure de l'extrémité haute du joint qui correspond à la dépouille 17. Dans des variantes, alternatives ou combinées si techniquement possible, le robinet et la tête de prise appuient sur l'extrémité haute du joint, le robinet appuie sur l'extrémité haute du joint, ou, encore, tête de prise appuie sur l'extrémité haute du joint.

L'extrémité basse 18 du joint qui présente une forme générale approximativement en selle destinée à épouser la conduite 21, est configurée pour que son bord interne 19 vienne au contact de la conduite en premier par rapport à ses autres parties comme on le voit mieux sur la Figure 4 d'un joint non comprimé. Sur cette dernière Figure on voit également la forme en tonneau 20 de la périphérie interne du joint (non compressé).

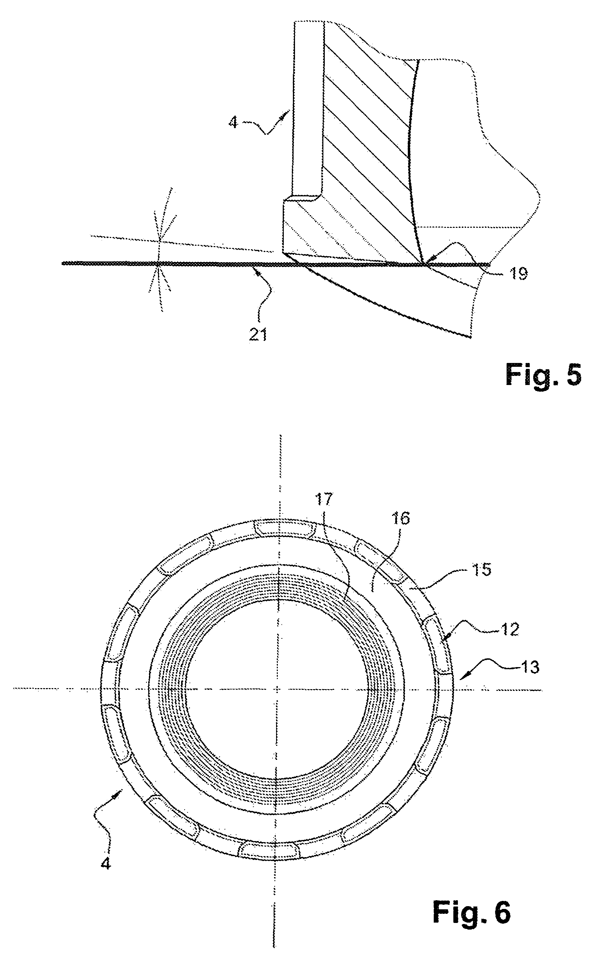

La forme de l'extrémité basse 18 du joint est mieux détaillée sur la Figure 5 d'un joint 4 non encore comprimé et commençant à s'appliquer sur une conduite 21. Le bord interne 19 de l'extrémité basse du joint commence seulement à s'appliquer sur la conduite et on constate qu'il existe un angle entre la conduite et l'extrémité basse du joint à l'état non comprimé.

La Figure 6, joint 4 en vue de dessus, permet de visualiser l'extrémité haute du joint avec sa dépouille 17 ondulée vers l'intérieur et sa partie extérieure 16 sensiblement plane et horizontale. Les réserves 12 et les nervures 13 avec leurs chanfreins 15 sont également visibles.

On comprend que le système de l'invention peut être mis en oeuvre selon d'autres modalités couvertes par la présente demande. Par exemple un collier à sangle peut être mis en oeuvre au lieu d'un collier rigide.

## Revendications

1. Système de prise en charge sur conduite, comportant un collier (1) à tête de prise et un joint (4) destiné à assurer l'étanchéité, le collier ayant une tête de prise (9) comportant un canal interne étendu entre un coté conduite et un coté robinet à l'opposé du coté conduite, le canal coté robinet comportant intérieurement une section de robinet (10) destinée à la fixation d'un robinet introduit dans le canal sur la tête de prise, le canal coté conduite comportant intérieurement une section de joint (11) destinée à la réception du joint dans la tête de prise, le joint étant un élément tubulaire en matière sensiblement élastique destiné à être compressé entre le robinet et la conduite lorsque le collier est en place, monté sur la conduite, le robinet et/ou la tête de prise appuyant sur l'extrémité haute du joint et l'extrémité basse du joint appuyant sur la conduite, la périphérie interne du joint définissant un passage de fluide entre un orifice de la conduite et le robinet, la périphérie externe du joint étant maintenue par la section de joint du canal de la tête de prise, le joint comportant au moins une nervure en relief verticale sur sa périphérie externe,
**caractérisé en ce que** la périphérie externe du joint d'un gabarit général cylindrique est formée d'une alternance de nervures (13) en relief et de réserves (12) en retrait, les nervures et réserves étant des zones parallèles étendues verticalement, les réserves en retrait s'étendant entre l'extrémité haute du joint et le bas à distance de l'extrémité basse du joint, les réserves en retrait s'arrêtant vers le bas à une distance déterminée de l'extrémité basse du joint, les nervures se rejoignant (14) le long de la partie basse de la périphérie externe du joint, la section de joint (11) du canal ayant une surface intérieure régulière cylindrique complémentaire du gabarit de la périphérie externe du joint afin que des espaces libres soient créés entre la section de joint du canal et les réserves au moins à l'état non compressé du joint.

2. Système selon la revendication 1, **caractérisé en ce que** la partie haute des nervures comporte un chanfrein (15), des espaces libres supplémentaires (15') étant ainsi créés entre la partie haute de la section de joint du canal et les parties chanfreinées des nervures au moins à l'état non compressé du joint.

3. Système selon la revendication 1 ou 2, **caractérisé en ce que** la surface de contact entre le collier et le joint par les nervures représente environ 60 % de la surface de la partie de réception de joint du canal de la tête de prise.

4. Système selon l'une quelconque des revendications précédentes, **caractérisé en ce que** la périphérie interne du joint a une forme en tonneau (20), l'épaisseur de la paroi du joint étant globalement plus importante vers les extrémités haute et basse du joint qu'entre les deux.

5. Système selon l'une quelconque des revendications précédentes, **caractérisé en ce que**, à l'état non comprimé, l'extrémité basse (18) du joint est sensiblement plane et est inclinée d'un angle de contact déterminé par rapport à la conduite, la partie interne (19), coté orifice, de l'extrémité basse du joint arrivant au contact de la conduite en premier lors de la mise en place du système.

6. Système selon l'une quelconque des revendications précédentes, **caractérisé en ce que**, à l'état non comprimé, l'extrémité haute du joint comporte une dépouille (17) vers l'intérieur, la partie extérieure (16) de l'extrémité haute du joint étant sensiblement plane et horizontale.

7. Système selon la revendication 6, **caractérisé en ce que** la dépouille de l'extrémité haute du joint comporte des ondulations ou indentations.

8. Système selon l'une quelconque des revendications précédentes, **caractérisé en ce qu'**en alternative, le gabarit général de la périphérie externe du joint est conique au lieu d'être cylindrique, le gabarit coté extrémité basse du joint ayant un diamètre supérieur à celui du gabarit coté extrémité haute du joint.

9. Joint pour mise en oeuvre dans un collier de prise en charge sur conduite, **caractérisé en ce qu'**il est spécialement configuré pour assurer l'étanchéité dans un système selon l'une quelconque des revendications précédentes.

10. Collier de prise en charge sur conduite comportant une tête de prise destinée à recevoir un joint et un robinet, **caractérisé en ce qu'**il comporte une tête de prise spécialement adaptée à la mise en oeuvre d'un joint selon la revendication 9 dans un système selon l'une quelconque des revendications 1 à 8.

## Claims

1. A line tapping system comprising a saddle (1) with a tapping head and a seal (4) intended to ensure tightness, the saddle having a tapping head (9) comprising an inner channel extending between a line side and a valve side opposite to the line side, the channel comprising internally, on the valve side, a valve section (10) for attaching a valve introduced into the channel on the tapping head, the channel comprising internally, on the line side, a seal section (11) for receiving the seal in the tapping head, the seal being a tubular element made of a substantially resilient material intended to be compressed between the valve and the line when the saddle is in place, mounted on the line, with the valve and/or the tapping head pressing on the upper end of the seal and the bottom end of the seal pressing on the line, the inner periphery of the seal defining a fluid communication between an orifice of the line and the valve, the outer periphery of the seal being held by the seal section of the tapping head channel, the seal comprising at least on protruding vertical rib on its outer periphery,
**characterized in that** the outer periphery of the seal, generally cylindrical in shape, is formed of alternating protruding ribs (13) and recessed valleys (12), the ribs and valleys being parallel areas extending vertically, the recessed valleys extending between the upper end of the seal and the bottom at distance from the bottom end of the seal, the recessed valleys ending downward at a defined distance from the bottom end of the seal, the ribs joining up (14) along the bottom portion of the outer periphery of the seal, the seal section (11) of the channel having a regular cylindrical inner surface complementary of the shape of the seal outer periphery so that free spaces are created between the seal section of the channel and the valleys, at least in the non-compressed state of the seal.

2. A system according to claim 1, **characterized in that** the upper portion of the ribs comprises a chamfer (15), additional free spaces (15') being thus created between the upper portion of the channel seal section and the chamfered portions of the ribs, at least in the non-compressed state of the seal.

3. A system according to claim 1 or 2, **characterized in that** the surface of contact between the saddle and the seal, through the ribs, forms about 60 % of the surface of the seal-receiving portion of the tapping head channel.

4. A system according to any one of the preceding claims, **characterized in that** the inner periphery of the seal has a barrel shape (20), the wall thickness of the seal being generally higher toward the upper and bottom ends of the seal than between these two ends.

5. A system according to any one of the preceding claims, **characterized in that**, in the non-compressed state, the bottom end (18) of the seal is substantially flat and is tilted by an defined contact angle with respect to the line, the inner portion (19), on the orifice side, of the seal bottom end coming in first into contact with the line when the system is installed.

6. A system according to any one of the preceding claims, **characterized in that**, in the non-compressed state, the upper end of the seal comprises an inward relief (17), the outer portion (16) of the seal upper end being substantially flat and horizontal.

7. A system according to claim 6, **characterized in that** the relief of the seal upper end comprises corrugations or indentations.

8. A system according to any one of the preceding claims, **characterized in that**, as an alternative, the general shape of the seal outer periphery is conical instead of being cylindrical, the shape of the seal on its bottom end side having a higher diameter than that of the shape of the seal on its upper end side.

9. A seal for use in a line tapping saddle, **characterized in that** it is especially configured to ensure tightness in a system according to any one of the preceding claims.

10. A line tapping saddle comprising a tapping head intended to receive a seal and a valve, **characterized in that** it comprises a tapping head especially adapted to the use of a seal according to claim 9 in a system according to any one of claims 1 to 8.

## Patentansprüche

1. System zum Aufnehmen auf einer Leitung, bestehend aus einer Klemme (1) mit Aufnahmekopf und aus einer Dichtung (4), die dazu bestimmt ist, die Abdichtung sicherzustellen, wobei die Klemme einen Aufnahmekopf (9) hat, der einen internen Kanal aufweist, der sich zwischen einer Leitungsseite und einer Hahnseite gegenüber der Leitungsseite erstreckt, wobei der Kanal auf der Hahnseite innen einen Zahnabschnitt (10) aufweist, der zum Befestigern eines Hahns (10) bestimmt ist, er in den Kanal auf dem Aufnahmekopf eingeführt wird, wobei der Kanal auf der Leitungsseite innen einen Dichtungsabschnitt (11) aufweist, der zum Aufnehmen der Dichtung in dem Aufnahmekopf bestimmt ist, wobei die Dichtung ein röhrenförmiges Element aus im Wesentlichen elastischem Werkstoff ist, das dazu bestimmt ist, zwischen dem Hahn und der Leistung zusammengedrückt zu werden, wenn die Klemme auf die Leitung montiert an ihrem Platz ist, wobei der Hahn und/oder der Aufnahmekopf auf das obere Ende der Dichtung drücken und das untere Ende der Dichtung auf die Leitung drückt, wobei der Innenumfang der Dichtung eine Flüssigkeitspassage zwischen einer Öffnung der Leitung und dem Hahn definiert, wobei der Außenumfang der Dichtung von dem Dichtungsabschnitt des Kanals des Aufnahmekopfs gehalten wird, wobei die Dichtung mindestens eine vorspringende Rippe senkrecht auf ihrem Außenumfang aufweist,
**dadurch gekennzeichnet, dass** der Außenumfang der Dichtung mit einer allgemein zylindrischen Form aus einem Wechsel von vorspringenden Rippen (13) und zurückspringenden Aussparungen (12) gebildet ist, wobei die Rippen und Aussparungen parallele Bereiche sind, die sich vertikal erstrecken, wobei sich die zurückspringenden Aussparungen zwischen dem oberen Ende der Dichtung und der Unterseite in Entfernung von dem unteren Ende der Dichtung erstrecken, wobei die zurückspringenden Aussparungen nach unten in einer bestimmten Entfernung von dem unteren Ende der Dichtung enden, wobei sich die Rippen (14) entlang des unteren Teils des Außenumfangs der Dichtung treffen, wobei der Dichtungsabschnitt (11) des Kanals eine regelmäßig zylindrische Innenfläche hat, die zu der Form des Außenumfangs der Dichtung komplementär ist, damit zwischen dem Dichtungsabschnitt des Kanals und den Aussparungen mindestens im nicht zusammengedrückten Zustand der Dichtung freie Räume geschaffen werden.

2. System nach Anspruch 1, **dadurch gekennzeichnet, dass** der obere Teil der Rippen eine Abfasung (15) aufweist, wobei zusätzliche freie Räume (15') daher zwischen dem oberen Teil des Dichtungsabschnitts des Kanals und den abgefasten Teilen der Rippen wenigstens im nicht zusammengedrückten Zustand der Dichtung geschaffen werden.

3. system nach Aspruch 1 oder 2, **dadurch gekennzeichnet, dass** die Berührungsfläche zwischen der Klemme und der Dichtung durch die Rippen etwa 60 % der Fläche des Dichtungsaufnahmeteils des Kanals des Aufnahmekopfs darstellt.

4. System nach einem der vorhergehenden Ansprüche, **dadurch gekennzeichnet, dass** der Innenumfang der Dichtung eine Tonnenform (20) hat, wobei die Stärke der Wand der Dichtung zu dem oberen Ende und zu dem unteren Ende der Dichtung insgesamt größer ist als zwischen ihnen.

5. System nach einem der vorhergehenden Ansprüche, **dadurch gekennzeichnet, dass** das untere Ende (18) der Dichtung im nicht zusammengedrückten Zustand im Wesentlichen flach und um eignen Berührungswinkel geneigt ist, der in Bezug zu der Leitung bestimmt wird, wobei auf der Öffnungsseite der Innenteil (19) des unteren Endes der Dichtung beim Anbringen des Systems zuerst mit der Leistung in Berührung kommt.

6. System nach einem der vorhergehenden Ansprüche, **dadurch gekennzeichnet, dass** das obere Ende der Dichtung im nicht zusammengedrückten Zustand eine Formschräge (17) nach innen aufweist, wobei der äußere Teil (16) des oberen Endes der Dichtung im Wesentlichen flach und horizontal ist.

7. System nach Anspruch 6, **dadurch gekennzeichnet, dass** die Formschräge des oberen Endes der Dichtung Wellungen oder Einschnitte aufweist.

8. System nach einem der vorhergehenden Ansprüche, **dadurch gekennzeichnet, dass** die allgemeine Form des Außenumfanges der Dichtung als Alternative kegelförmig ist statt zylindrisch zu sein, wobei die Form auf der Seite des unteren Endes der Dichtung einen Durchmesser hat, der größer ist als der der Form auf der seite des oberen Endes der Dichtung.

9. Dichtung zum Umsetzen in einer Aufnahmeklemme auf einer Leitung, **dadurch gekennzeichnet, dass** sie speziell konfiguriert ist, um die Abrichtung in einem System nach einem der vorhergehenden Ansprüche sicherzustellen.

10. Aufnahmeklemme auf einer Leistung, die einen Aufnahmekopf aufweist, der dazu bestimmt ist, eine Dichtung und eignen Hahn auszunehmen, **dadurch gekennzeichnet, dass** sie einen Aufnahmekopf aufweist, der speziell an das Umsetzen einer Dichtung nach Anspruch 9 in einem System nach einem der Ansprüche 1 bis 8 angepasst ist.
